(19) Europäisches Patentamt / European Patent Office / Office européen des brevets

(11) **EP 2 340 438 B1**

(12) **EUROPÄISCHE PATENTSCHRIFT**

(45) Veröffentlichungstag und Bekanntmachung des Hinweises auf die Patenterteilung:
**13.02.2013 Patentblatt 2013/07**

(21) Anmeldenummer: **10741909.5**

(22) Anmeldetag: **22.07.2010**

(51) Int Cl.:
*G01P 5/00* (2006.01)   *G01P 21/02* (2006.01)
*B64C 23/06* (2006.01)

(86) Internationale Anmeldenummer:
**PCT/EP2010/004496**

(87) Internationale Veröffentlichungsnummer:
**WO 2011/023270 (03.03.2011 Gazette 2011/09)**

(54) **STRÖMUNGSERMITTLUNGSVERFAHREN**

FLOW DETERMINATION METHOD

PROCÉDÉ DE DÉTERMINATION D'ÉCOULEMENT

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **28.08.2009 DE 102009039016**

(43) Veröffentlichungstag der Anmeldung:
**06.07.2011 Patentblatt 2011/27**

(73) Patentinhaber: **Deutsches Zentrum für Luft- und Raumfahrt e.V.
51147 Köln (DE)**

(72) Erfinder: **FISCHENBERG, Dietrich
38108 Braunschweig (DE)**

(74) Vertreter: **Aisch, Sebastian et al
Gramm, Lins & Partner GbR
Patent- und Rechtsanwaltssozietät
Freundallee 13a
30173 Hannover (DE)**

(56) Entgegenhaltungen:
EP-A1- 1 837 661      DE-A1- 4 320 295
DE-A1- 10 039 109     DE-A1-102007 051 318

EP 2 340 438 B1

## Beschreibung

Die Erfindung betrifft ein Verfahren zur Ermittlung einer Strömung, bei dem Strömungsgeschwindigkeiten in Messrichtung mittels Sensoren an mindestens einer Messposition bestimmt werden. Die Erfindung betrifft ebenfalls ein Computerprogramm mit Programmcodemitteln und eine Vorrichtung hierzu.

Eine Strömung ist eine mehr oder weniger gerichtete Bewegung von Teilchen. Bei einer gewollten Strömung macht man sich dabei diese Eigenschaft zu nutze, um mit Hilfe dieser gerichteten Bewegung der Teilchen diese über eine Strecke transportieren zu können. Eine Strömung kann aber auch ein unerwünschter Nebeneffekt sein, der beispielsweise dadurch entsteht, dass sich Objekte relativ zu einem Medium bewegen.

So ist es beispielsweise schon seit längerem aus der Luftfahrt bekannt, dass Flugzeuge, sobald sich ihr Bugrad von der Erde abhebt, am Ende ihrer Flügelspitzen Luftverwirbelungen erzeugen, die allgemein hin auch als Wirbelschleppe bekannt ist. Bei einer Wirbelschleppe handelt es sich um eine wirbelartige Luftströmung hinter fliegenden Flugzeugen, die aus jeweils zwei zopfartigen und gegenläufig drehenden Luftverwirbelungen besteht. Zwischen diesen beiden Wirbelkernen, die in der Regel einen Abstand von dreiviertel der Flügelspannweite des betreffenden Flugzeuges haben, existieren meist stark vertikal abfallende Luftströmungen, während außerhalb der Wirbelkerne starke Aufwinde existieren, die nachfolgenden Flugzeugen sehr gefährlich werden können. Ein Flugzeug, das sich z.B. mit einer Tragflügelhälfte im Abwind zwischen den Wirbelkernen und mit der anderen Tragflügelhälfte im Aufwindgebiet befindet, gerät in hohe und gefährliche Rolllagen. So wurde bei einigen Flugzeugunglücken die Ursache darin gesehen, dass ein nachfolgendes Flugzeug in die Wirbelschleppe eines vorausfliegenden Flugzeuges geraten ist und aufgrund der stark vertikalen Luftbewegungen schließlich abstürzte, was in der Praxis die häufigste Ursache für Zwischenfälle kurz vor der Landung ist.

Dieses Phänomen der Wirbelschleppe tritt gerade bei Landungen von großen Flugzeugen auf, so dass aus sicherheitstechnischen Gründen nach der Landung eines Flugzeuges eine Weile gewartet werden muss, bis auf derselben Start- und Landebahn wieder Flugverkehr zugelassen werden kann. Diese Sicherheitsmaßnahme dient dazu, dass Flugzeuge während des Startes oder der Landung nicht in die Wirbelschleppe eines zuvor gelandeten Flugzeuges geraten und somit letztendlich abstürzen. Die Beständigkeit einer solchen Wirbelschleppe hängt dabei von den äußeren Umwelteinflüssen, wie Temperatur, Luftdruck und Windrichtung sowie Windgeschwindigkeit ab. Da bis jetzt nicht zuverlässig die Existenz einer solchen Wirbelschleppe festgestellt werden kann, wird an Flughäfen aus Sicherheitsgründen eine hinreichend große Zeit (bis zu fünf Minuten) nach der Landung eines Flugzeuges gewartet, bis wieder Flugverkehr auf dieser Landebahn zugelassen wird, unabhängig davon, ob die Wirbelschleppe tatsächlich noch existiert oder nicht. Dies wirkt sich letztendlich negativ auf die Auslastung des Flughafens aus.

Neben der Landephase sind Wirbelschleppen auch in Reiseflughöhe ein Problem. Durch die dichte Staffelung im Luftraum passiert es immer häufiger, das ein Flugzeug in die Schleppe eines voraus fliegenden oder oberhalb fliegenden (Wirbelschleppen sinken in der Regel ab) Flugzeuges gerät. Starke Beschleunigungen an Bord sind dann die Folge, was zu Verletzungen der Personen an Borde führen kann, die nicht angeschnallt sind.

Aus dem Stand der Technik sind dabei eine Reihe von Maßnahmen bekannt, um solche Wirbelschleppen zu vermeiden. So werden beispielsweise so genannte Winglets eingesetzt, welche die Verwirbelungen der Luftströmung am Ende der Tragflächen verringern soll. Winglets sind dabei am Ende der Tragflächen von Flugzeugen angebrachte Verlängerungen, die meist im Wesentlichen vertikal zu der Tragfläche angeordnet sind. So ist beispielsweise aus der DE 10 2007 059 455 A1 eine Flügelspitzenverlängerung bekannt, die das Entstehen einer solchen Wirbelschleppe eines Flugzeuges abmildern soll.

Aus der EP 1 837 661 A1 ist ein fluiddynamisches Messverfahren zur Messung eines zweidimensionalen oder dreidimensionalen Strömungsfeldes bekannt. Dabei werden Messungen der lokalen Strömungsgeschwindigkeiten an mehreren Orten und zu mehreren Zeiten durchgeführt, um zeitlich und örtlich definierte Messwerte zu erhalten, wobei anschließend die Messwerte auf örtliche Bereiche interpoliert werden, in denen keine Messungen durchgeführt wurden, um so ein umfassendes Strömungsfeld zu erhalten.

Aus der DE 10 39 109 A1 ist ein Verfahren und eine Einrichtung zur Bestimmung des störenden Einflusses einer Wirbelschleppe bekannt. Dabei werden atmosphärische Daten in einer solchen Häufigkeit von Flugzeugen gemessen, dass sich daraus ein Bild der atmosphärischen Bedingung im Luftraum ableiten lässt. Diese von den Flugzeugen aufgenommenen atmosphärischen Daten werden dann an eine Bodenstation übertragen, um so ein aus den Flugdaten ermitteltes Wirbelschleppenmodel zu präzisieren.

Aus der DE 43 20 295 A1 ist ein Verfahren zum Messen des Durchflusses in teilgefüllten oder vollgefüllten Rohrleitungen und offenen Gerinnen bekannt, wobei innerhalb der Abflussquerschnitte mit Hilfe von Sensoren lokale Strömungsgeschwindigkeiten gemessen, aus denen dann numerisch ein simuliertes Strömungsprofil in dem Durchfluss ermittelt wird.

Aus der DE 10 2007 051 318 A1 ist darüber hinaus ein Herstellungsverfahren für einen Radarsensor bekannt. Dabei werden die in einer keramischen Trägerstruktur enthaltenen Kavitäten mit einer Matrix befüllt und anschließend eine planare Antennenanordnung auf der Matrix aufgebracht.

Aufgabe der vorliegenden Erfindung ist es daher, Strömungen sicher und zuverlässig identifizieren zu können.

Die Aufgabe wird mit dem Verfahren der eingangs genannten Art erfindungsgemäß gelöst durch die Schritte:

a) Initialisieren von Parametern eines die Strömung abbildenden Strömungsmodells,

b) Berechnen von simulierten Strömungsgeschwindigkeiten in Messrichtung an der mindestens einen Messposition in Abhängigkeit des die Strömung abbildenden Strömungsmodells,

c) Vergleich der gemessenen Strömungsgeschwindigkeiten mit den simulierten Strömungsgeschwindigkeiten und Anpassen der Parameter des die Strömung beeinflussenden Strömungsmodells durch Minimieren einer von dem Vergleichsergebnis abhängigen Gütefunktion, und

d) Wiederholen der Schritte b) und c) und Ermitteln der Strömung in Abhängigkeit des angenäherten Strömungsmodells.

Damit wird es möglich, Strömungen, wie beispielsweise Luftströmungen einer Wirbelschleppe, hoch genau zu ermitteln, was beispielsweise bei der Anwendung im Luftverkehr den Komfort und die Sicherheit wesentlich erhöhen.

Die Sensoren, die die gemessenen Strömungsgeschwindigkeiten in Messrichtung messen, sind beispielsweise Lidar-Sensoren, die die Geschwindigkeit einer Strömung ausschließlich in Messrichtung ermitteln können. Es könnte beispielsweise mit solchen Lidar-Sensoren Strömungsgeschwindigkeiten von Luftströmungen gemessen werden, indem ein Laserstrahl in Messrichtung ausgesendet wird, der von entsprechenden Schwebeteilchen reflektiert wird. Anhand der Laufzeit kann dann die Geschwindigkeit ermittelt werden. Allerdings lassen sich damit nur Strömungsgeschwindigkeiten in Messrichtung ermitteln, so dass ein solcher Sensor in der Regel Strömungsgeschwindigkeiten orthogonal zur Messrichtung mit diesen Systemen nicht messbar sind.

Strömungen, wie beispielsweise Luftströmungen, lassen sich in der Regel durch so genannte Strömungsmodelle abbilden, um so das Verhalten einer Strömung beschreiben zu können. Dabei werden die durch das Strömungsmodell beschriebenen Strömungen anhand der Parameter des zugrunde liegenden Strömungsmodells charakterisiert. Erfindungsgemäß werden nun in Schritt a) die entsprechenden Parameter des Strömungsmodells initialisiert.

Im nächsten Schritt (Schritt b)) wird aus dem in Schritt a) initialisierten Strömungsmodell an den Messpunkten, an denen Strömungsgeschwindigkeiten gemessen wurden, simulierte Strömungsgeschwindigkeiten berechnet, indem die realen Messpunkte in das Strömungsmodell übertragen werden und an diesen Messpunkten die Strömungsgeschwindigkeiten, so wie sie das Modell beschreibt, berechnet werden.

In Schritt c) werden nun die gemessenen Strömungsgeschwindigkeiten, so wie sie gemessen wurden, mit den simulierten Strömungsgeschwindigkeiten, so wie sie aus dem Strömungsmodell berechnet wurden, miteinander verglichen, so dass sich beispielsweise bei der Differenzbildung zeigt, wie genau das mit dem Parametern initialisierte Strömungsmodell die tatsächlich vorhandene Strömung abbildet.

Denn aufgrund der Tatsache, dass die Sensoren die reale Strömungsgeschwindigkeit ausschließlich in Messrichtung ermitteln können, kann mit diesen Sensoren die tatsächliche Strömungsrichtung und Strömungsgeschwindigkeit nicht abgeleitet werden, da Informationen bezüglich Strömungsrichtung und Strömungsgeschwindigkeit in den anderen beiden Dimensionen fehlt. Aus diesem Grund wird bei den simulierten Strömungsgeschwindigkeiten auch nur die Strömungsgeschwindigkeit berechnet, wie sie in Messrichtung messbar sein würde, wenn das Strömungsmodell eine entsprechende Strömung 100%tig abbilden würde. Somit können die simulierten Strömungsgeschwindigkeiten, berechnet aus dem Strömungsmodell und die realen Strömungsgeschwindigkeiten, ermittelt aus den Sensoren, miteinander verglichen werden.

Mit Hilfe einer Gütefunktion, der das Vergleichsergebnis zugrunde gelegt wird, werden nun die Parameter des Strömungsmodells entsprechend angepasst, indem die Gütefunktion minimiert wird. Bei der Gütefunktion handelt es sich um ein statistisches Verfahren, mit deren Hilfe, angepasst an das vorliegende Verfahren, die Parameter des Strömungsmodells optimiert werden können, um so die Differenz zwischen den realen Strömungsgeschwindigkeiten und den berechneten Strömungsgeschwindigkeiten zu minimieren.

Um das Ergebnis dabei schrittweise zu verbessern, schlägt die vorliegende Erfindung vor, die Schritte b) und c) zu wiederholen, um so die Parameter des Strömungsmodells weiter an die exakte Strömung anzunähern und anschließend die tatsächliche Strömung aus dem .angenäherten Strömungsmodell zu ermitteln. Bei dem vorliegenden iterativen Verfahren werden somit die Parameter des Strömungsmodells schrittweise so angepasst, bis das Strömungsmodell die vorhandene Strömung hoch genau abbildet.

So kann die zu ermittelnde Strömung beispielsweise eine von einem Flugobjekt erzeugte Wirbelschleppenströmung sein, wie sie bereits in der Einleitung geschrieben wurde. Eine solche Wirbelschleppenströmung hat dabei die charakteristische Eigenschaft, dass die beiden Wirbel sehr starke horizontale und vertikale Strömungsgeschwindigkeiten aufweisen, während jedoch die Strömungsgeschwindigkeit orthogonal zu der Wirbelebene nahezu null ist, so dass mit Hilfe der Sensoren eine Strömungsgeschwindigkeit kaum messbar ist, wenn man sich direkt hinter (also in den Flucht) einer solchen Wirbelschleppe befindet.

Eine solche Wirbelschleppenströmung lässt sich in der Regel durch ein analytisches Wirbelmodell abbilden, wie beispielsweise ein analytisches Wirbelmodell nach Burnham-Hallock. Dieses Modell weist als Parameter die Position der Wirbelschleppe und die Wirbelstärke auf. Zusätzlich wird noch die Orientierung der Wirbelschleppe, relativ zu den Positionen eines die Wirbelschleppe detektierenden Objektes, benötigt, um die realen Messpositionen in das Wirbelschleppenmodell zu transformieren.

Besonders vorteilhaft ist es dabei, wenn die Strömungsgeschwindigkeiten über die Zeit ermittelt bzw. berechnet werden, und zwar derart, dass innerhalb eines bestimmten Zeitraumes an diskreten Zeitpunkten die Strömungsgeschwindigkeiten mittels der Sensoren ermittelt werden und die simulierten Strömungsgeschwindigkeiten an diesen Zeitpunkten berechnet werden. Dadurch ergibt sich an der jeweiligen Messposition ein entsprechender Geschwindigkeitsverlauf über die Zeit, der mit Hilfe des vorliegenden Verfahren, basierend auf dem Strömungsmodell, angenähert werden soll. So kann beispielsweise die Messposition mit einer Frequenz von 10 Hz abgetastet werden, so dass pro Sekunde 10 Messungen an der Messposition durchgeführt werden. Daraus ergeben sich dann pro Sekunde jeweils zehn Strömungsgeschwindigkeiten.

Ganz besonders vorteilhaft ist es dabei auch, wenn mehrere Messpositionen insbesondere vier Messpositionen, nämlich an allen vier äußeren Ecken der Messebene (wodurch ein möglichst großer Schrägmesswinkel erreicht wird), mit Hilfe der Sensoren abgetastet werden und an diesen Messpositionen somit die realen Strömungsgeschwindigkeiten ermittelt werden. Somit ergeben sich eine Vielzahl von Messpositionen, an deren Stelle dann die modellierten Strömungsgeschwindigkeiten aus dem Strömungsmodell berechnet werden können und mit den gemessenen Strömungsgeschwindigkeiten gegenübergestellt werden können.

Des Weiteren ist es ganz besonders vorteilhaft, wenn die realen Strömungsgeschwindigkeiten kontinuierlich gemessen werden und somit die Grundlage des Vergleiches kontinuierlich an die aktuelle Lage angepasst werden. Dabei wird das Verfahren nach den Schritten a) bis d) nur dann durchgeführt, wenn die an den Messpositionen gemessenen Strömungsgeschwindigkeiten eine signifikante Abweichung gegenüber den normalen Strömungsgeschwindigkeiten, die in der Regel im Messrauschen untergehen, haben. Erst wenn sich zeigt, dass eine signifikante Abweichung gegenüber den normalen Strömungsgeschwindigkeiten auftritt, wird das Verfahren nach den Schritten a) bis d) durchgeführt.

Des Weiteren ist es auch ganz besonders vorteilhaft, wenn das iterative Verfahren solange wiederholt wird, bis die Differenz zwischen den realen und den modellierten Strömungsgeschwindigkeiten einen entsprechenden Annäherungsschwellenwert unterschreitet. Da in jedem Iterationsschritt die Parameter des Strömungsmodells in Abhängigkeit der Gütefunktion angepasst werden, nähert sich das Strömungsmodell der realen Strömung in jedem Durchlauf immer weiter an. So wurde beispielsweise erkannt, dass in der Regel nicht mehr als zehn Iterationsschritte notwendig sind, um eine entsprechende Wirbelschleppenströmung hochgenau annähern zu können.

Darüber hinaus ist es ganz besonders vorteilhaft, wenn die Parameter des Strömungsmodells in Schritt a) anhand eines die Strömung erzeugenden Objektes initialisiert werden. So ist es beispielsweise bei der Wirbelschleppenströmung denkbar, dass ein Flugzeug, welches eine Wirbelschleppenströmung ermitteln möchte, zuvor Flugdaten eines sich in der Nähe befindlichen Flugzeuges empfängt und so in etwa abschätzen kann, wo sich eine Wirbelschleppenströmung befinden könnte. Da sich jedoch eine solche Wirbelschleppenströmung aufgrund der Umwelteinflüsse kurz nach dem Entstehen relativ stark verändert, und zwar sowohl hinsichtlich der Position als auch hinsichtlich der Stärke, würde diese Information in der Regel nicht ausreichen, um die Wirbelschleppenströmung hochgenau ermitteln zu können. Zum Initialisieren der Parameter des vorliegenden Verfahrens reicht dies jedoch aus, da aufgrund der Wiederholung der vorliegenden Verfahrensschritte dann die Wirbelschleppenströmung hoch genau angenähert wird.

Das Verfahren wird anhand der beigefügten Zeichnungen beispielhaft näher erläutert. Es zeigen:

Figur 1a, 1b    - schematische Darstellung der Messebene;
Figur 2    - Ablaufdiagramm des Verfahrens
Figur 3    - schematische Darstellung einer Wirbelschleppe
Figur 4a, 4b    - schematische Darstellung der Geschwindigkeitsmessung
Figur 5    - beispielhafte Darstellung einer Messung.

Das vorliegende Verfahren wird anhand eines Ausführungsbeispiels, was sich auf die Erkennung einer Wirbelschleppe bei Flugzeugen bezieht, näher erläutert. Dies ist jedoch nicht einschränkend zu verstehen. Vielmehr kann das Verfahren für jegliche andere Strömungen angewendet werden, deren Geschwindigkeiten sich mittels Sensoren mit erfassen lassen und wobei sich die Strömung mit Hilfe eines Strömungsmodells abbilden lässt.

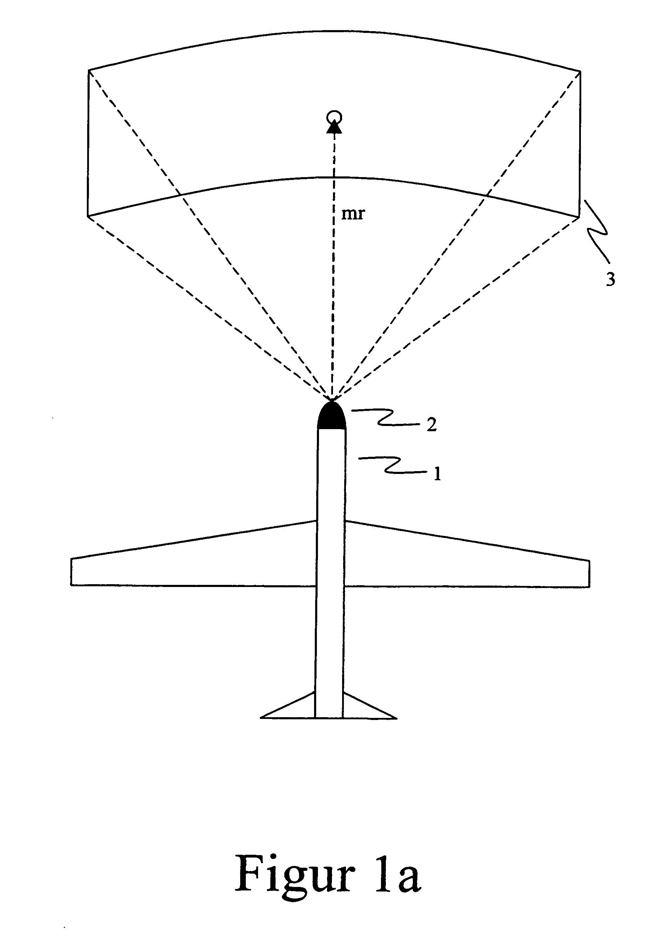

Figur 1a zeigt die schematische Darstellung des Messprinzips. Ein Flugzeug 1 ist am Bug mit Sensoren 2 ausgestattet, die mit Hilfe von gerichteten Signalen Strömungsgeschwindigkeiten in Messrichtung erfassen können. Solche Sensoren 2 können beispielsweise Lidar-Sensoren sein, die in Messrichtung ein Signal aussenden, welches dann von reflektierenden Teilchen zurückgesendet wird. Daraus lässt sich dann die Strömungsgeschwindigkeit in Messrichtung mit ermitteln.

Wie Figur 1a zeigt, wird durch das Abtasten mittels der Sensoren 2 eine Messebene 3 aufgespannt, die beispielsweise für die Nahfeldmessung 50m bis 200m vor dem Flugzeug 1 bzw. für die Fernfeldmessung 1000m bis zu 10000m vor dem Flugzeug 1 sein kann. Die Messrichtung mr ist dabei die Richtung, in die das gerichtete Signal von dem Sensor 2 in Richtung Messebene 3 ausgesendet wird. Die dabei erfassten Strömungsgeschwindigkeiten beziehen sich dabei jedoch ausschließlich auf Geschwindigkeiten in die Tiefe der Messebene 3, so dass Strömungsgeschwindigkeiten, die orthogonal zur Messrichtung mr des gerichteten Signals liegen, von dem System nicht erfasst werden könnten.

Eine Nahfeldmessung ist gerade beim Landeanflug besonders sinnvoll, da dadurch die Wirbelschleppe hochgenau erfasst werden kann und mit Hilfe der Flugsteuerung ausgesteuert werden kann, was nur bei einer hochgenauen Erfassung möglich ist. Die Fernfeldmessung dagegen ist wichtig bei hohen Geschwindigkeiten, um der Wirbelschleppe rechtzeitig ausweichen zu können.

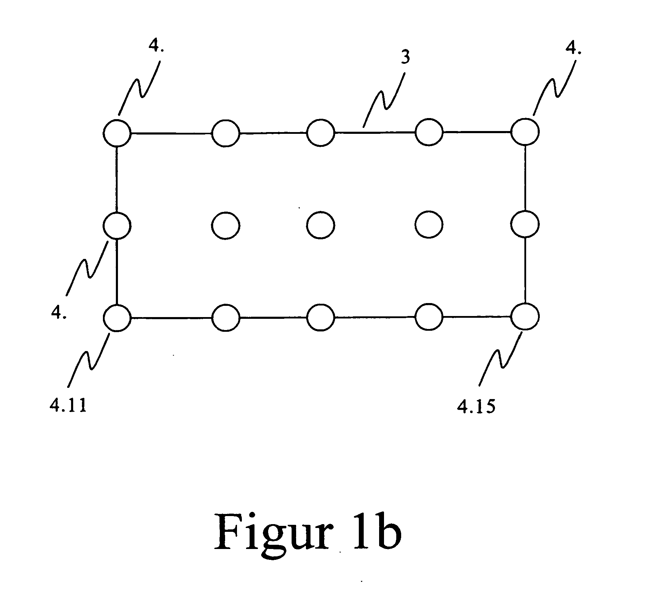

Figur 1b zeigt noch einmal schematisch die Messebene 3, die insgesamt 15 Messpositionen 4.1 bis 4.15 aufweist. Wie jede dieser Messpositionen 4.1 bis 4.15 wird dabei mit Hilfe eines gerichteten Signals der Sensoren 2 gemessen. Die Sensoren 2 messen dabei an jeder Messposition 4.1 bis 4.15 die Strömungsgeschwindigkeiten in der so genannten Line-of-Sight (LoS)-Richtung, wobei jede Messposition 4.1 bis 4.15 durch die Entfernung, durch den vertikalen und horizontalen Winkel definiert ist. In dem LoS Koordinatensystem wird somit jede Messposition 4.1 bis 4.15 durch die Entfernung von den Sensoren 2 zu dem Messpunkt sowie durch die entsprechenden Winkel in horizontaler und vertikaler Ebene bestimmt.

So hat beispielsweise die Messposition 4.5 in Figur 1b einen vertikalen Winkel von 10° und einen horizontalen Winkel von 20° sowie, bei einer Nahfeldmessung, eine Entfernung von 150m von den Sensoren 2.

So liegt bei heutigen LIDAR-Systemn die Gesamtpulsfrequenz durchaus bei 500 - 1000 Hz, was bei einer Updaterate des gesamten Messfeldes von z.B. 10 Hz ca. 50 - 100 Messpositionen entspricht.

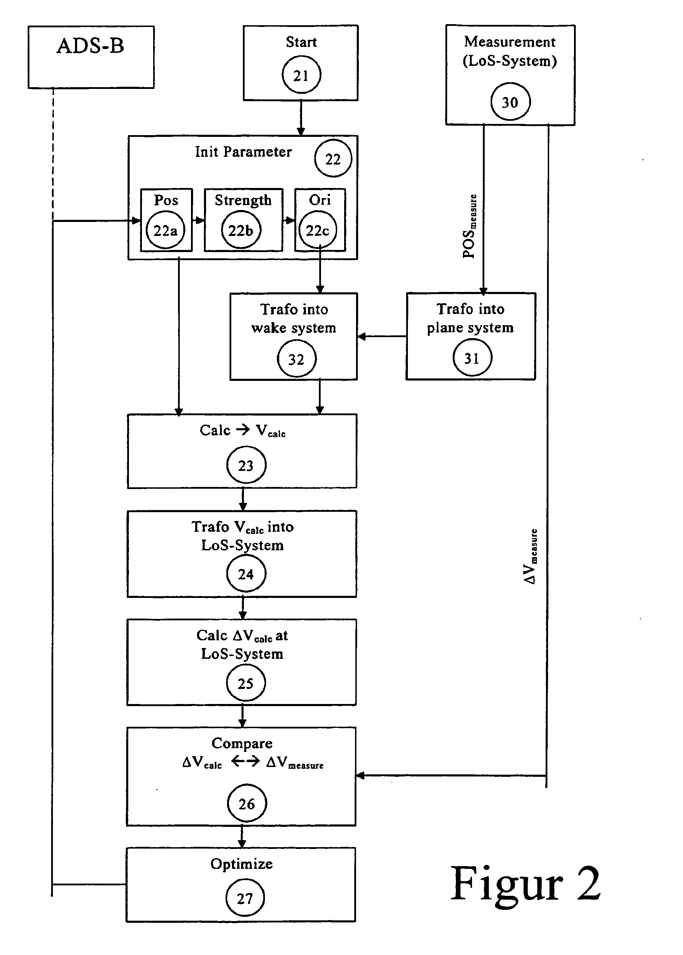

Figur 2 zeigt schematisch den Ablauf des vorliegenden Verfahrens. Das Verfahren beginnt mit dem Knoten 21. Am Punkt 22 werden zunächst die Parameter des zugrunde gelegten Strömungsmodells initialisiert. Dies kann beispielsweise dadurch geschehen, dass ein sich in der Nähe des Flugzeuges 1 befindliches anderes Flugzeug, dessen Wirbelschleppe erkannt werden soll, seine Daten über das ADS-B-System übertragen hat und somit annäherungsweise vorhergesagt werden kann, wo sich möglicherweise eine Wirbelschleppe befindet. Mit anderen Worten, aus dem Sicherheitssystem ADS-B (Automatic Dependent Survilance-Broadcast) werden die Parameter einer solchen Wirbelschleppe anhand der Flugzeugdaten des anderen Flugzeuges annäherungsweise bestimmt. Da jedoch Wirbelschleppen aufgrund ihrer Instabilität sehr stark von äußeren Umwelteinflüssen, wie Wind und Luftdruck, abhängig sind, verändern sie sich sehr stark kurz nach ihrer Erzeugung, so dass das ADS-B-System grundsätzlich nicht dafür geeignet ist, eine solche Wirbelschleppe hochgenau aus den Flugzeugdaten des wirbelerzeugenden Flugzeuges zu bestimmen.

Nachdem die Parameter des Strömungsmodells in Schritt 22 initialisiert wurden, werden für den nächsten Schritt 23 die Messpositionen innerhalb des Strömungsmodells benötigt. Die Messpositionen 4.1 bis 4.15, wie sie in Figur 1b beschrieben wurden, sind die Positionen auf der Messebene 3, die von einem entsprechend gerichteten Signal eines Sensors gescannt wurden. Dieses Messen der Strömungsgeschwindigkeiten an den Messpositionen 4.1 bis 4.15 erfolgt in Schritt 30 parallel zu dem eigentlichen Verfahren. Die Position dieser Messpunkte 4.1 bis 4.15 liegen dabei im so genannten LoS-System vor, d.h. ihre Position bestimmt durch die Messentfernung sowie dem horizontalen und vertikalen Winkel.

In einem darauf folgenden Schritt werden diese Koordinaten der Messpositionen 4.1 bis 4.15 in ein geodetisches Koordinatensystem umgerechnet, wobei der Ursprung dieses Koordinatensystems die Sensoren 2 an dem Flugzeug 1 sind. Die Umrechnung erfolgt dabei anhand der nachfolgenden Winkelbeziehungen:

$$x_{Sensor,geo} = x_{mess} \cos \psi_{Sensor} \cos \Phi_{Sensor}$$

$$y_{Sensor,geo} = x_{mess} \sin \psi_{Sensor} \cos \Phi_{Sensor}$$

$$z_{Sensor,geo} = x_{mess} \sin \psi_{Sensor} \, ,$$

wobei $x_{Sensor,geo}$, $y_{Sensor,geo}$ und $z_{Sensor,geo}$ die Koordinate der entsprechenden Messposition im geodetischen Koordinatensystem mit Ursprung der Sensoren 2 ist, $x_{mess}$ die Messentfernung (beispielsweise 150m) und $\Psi_{Sensor}$ (Psi) der

horizontale Winkel und $\Phi_{Sensor}$ (Phi) der vertikale Messwinkel ist. Diese Umrechnung erfolgt in Schritt 31.

Das in diesem Ausführungsbeispiel zugrunde gelegte Strömungsmodell ist ein Strömungsmodell nach Burnham-Hallock, welches unter anderem als Parameter die Orientierung bzw. Ausrichtung der Wirbelschleppe aufweist. Diese Orientierung ist dabei relativ zu dem wirbelschleppeerfassenden Flugzeug als Winkel definiert. Um nun an den Messpositionen 4.1 bis 4.15 die Strömungsgeschwindigkeiten aus dem Strömungsmodell ermitteln zu können, müssen die Koordinaten der Messpositionen, die in Schritt 31 in ein geodetisches Koordinatensystem mit Ursprung der Sensoren 2 umgeformt wurde, in das Koordinatensystem der Wirbelschleppe umgewandelt werden. Diese erfolgt ebenfalls mit den entsprechenden Winkelbeziehungen wie folgt:

$$x_{ws} = x_{Sensor,geo} \cos\psi_{wake} + y_{Sensor,geo} \sin\psi_{wake}$$

$$y_{ws} = -x_{Sensor,geo} \sin\psi_{wake} + y_{Sensor,geo} \cos\psi_{wake}$$

$$z_{ws} = z_{Sensor,geo}$$

wobei $x_{ws}$, $y_{ws}$ und $z_{ws}$ die Koordinate der Messposition im Wirbelachsensystem (ws) ist und $\Psi_{wake}$ der horizontale Winkel zwischen der Wirbelschleppe und dem Flugzeug angibt. Optional können diese Formeln auch entsprechend auf den vertikalen Drehwinkel $\Psi_{wake}$ erweitert werden. Diese Transformation der Messpositionen aus dem geodetischen Koordinatensystem in das geodetische Wirbelachsensystem erfolgt in Schritt 32.

In Schritt 23 werden nun an den in Schritt 32 ermittelten Messpositionen im Wirbelachsensystem die Strömungsgeschwindigkeiten an diesen Positionen aus dem Strömungsmodell ermittelt. Dazu hat Schritt 23 als Eingang sowohl die transformierten Messpositionen im Wirbelachsensystem aus Schritt 32 sowie die Parameter des Strömungsmodells, die im Schritt 22 initialisiert wurden. An allen Messpunkten wird nun die entsprechende Strömungsgeschwindigkeit ermittelt.

Wurden diese Strömungsgeschwindigkeiten an den Messpunkten ermittelt, so könnten diese Strömungsgeschwindigkeiten als Eingang in die Flugzeugsteuerung dienen, um beispielsweise die Wirbelschleppe entsprechend auszusteuern und so die Sicherheit und den Komfort beim Fliegen durch eine solche Wirbelschleppe zu erhöhen.

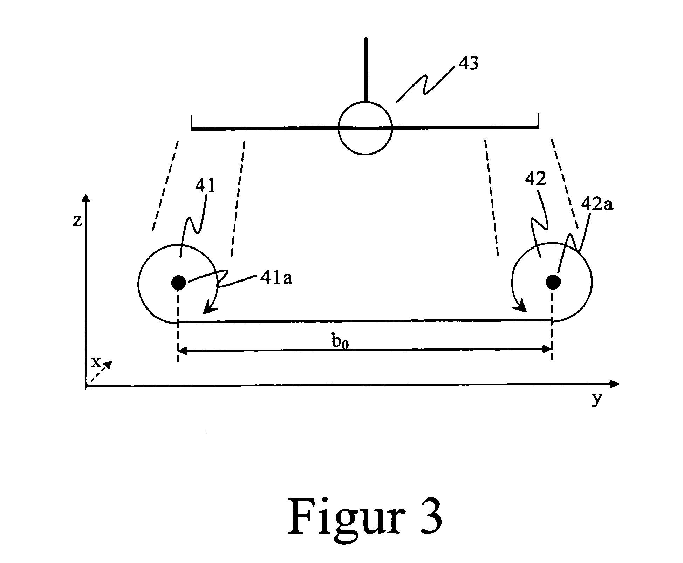

In der Wirbelsystemebene y, z, wie sie beispielsweise in Figur 3 gezeigt ist, berechnet sich der Abstand r eines Punktes vom rechten ($y_{ri}$, $z_{ri}$) bzw. vom linken Wirbelkern ($y_{li}$, $z_i$) an jeder Messposition wie folgt:

$$r_{ri} = \sqrt{(y_{ws} - y_{ri})^2 + (z_{ws} - z_{ri})^2}$$

$$r_{le} = \sqrt{(y_{ws} - y_{le})^2 + (z_{ws} - z_{ri})^2}$$

wobei $y_{ws}$ und $z_{ws}$ die horizontale und vertikale Position der Messpositionen darstellt, so dass sich für $r_{ri}$ sowie $r_{le}$ für jede Messposition der Abstand von den jeweiligen Wirbelkernen gibt.

Um nun die Geschwindigkeiten an diesen Positionen auszurechnen, werden diese Abstände in das Strömungsmodell von Burnham-Hallock eingegeben, wobei sich die Geschwindigkeiten wie folgt berechnen:

$$V_t(r_{ri}) = \frac{\Gamma}{2\pi} \frac{r_{ri}}{r_c^2 + r_{ri}^2}$$

$$V_t(r_{le}) = \frac{\Gamma}{2\pi} \frac{r_{le}}{r_c^2 + r_{le}^2}$$

wobei $r_c$ der Kernradius ist, der mit 4% der Flügelspannweite fest vorgegeben ist und r die Energie des Wirbels darstellt. Mit der Formel

$$V_y = V_t(r_{ri})\left(\frac{z - z_{ri}}{r_{ri}}\right) - V_t(r_{le})\left(\frac{z - z_{le}}{r_{le}}\right)$$

$$V_z = V_t(r_{ri})\left(\frac{y - y_{ri}}{r_{ri}}\right) - V_t(r_{le})\left(\frac{y - y_{le}}{r_{le}}\right)$$

werden nun die Geschwindigkeiten an diesem Punkt in ihre horizontale Komponente $(V_y)$ sowie ihre vertikale Komponente $(V_z)$ im Wirbelachsensystem aufgespalten, wobei die x-Komponente des Wirbels im Wirbelachsensystem auf 0 gesetzt wird ($V_x = 0$).

Somit ergibt sich an jeder Messposition, die nun im Wirbelachsensystem identifiziert worden ist, die entsprechende Geschwindigkeit aus dem Strömungsmodell der Wirbelschleppe.

Um die berechneten Strömungsgeschwindigkeiten mit den gemessenen Strömungsgeschwindigkeiten überhaupt vergleichen zu können, müssen die berechneten Strömungsgeschwindigkeiten, die nun in horizontalen und vertikalen Komponente vorliegen, wieder in das LoS-System der Sensoren umgewandelt werden. Dies muss deshalb gemacht werden, da die Sensoren 2 lediglich die Strömungsgeschwindigkeiten in Messrichtung ermitteln und somit ausschließlich eine Strömungsgeschwindigkeitsdifferenz ($\Delta V$ - $LoS$) ermitteln können, da die einzelnen Geschwindigkeitskomponenten nicht aufgespalten werden können. Daher werden die berechneten Strömungsgeschwindigkeiten, die noch in den jeweiligen horizontalen und vertikalen Komponenten vorliegen, zurück in das LoS-System transformiert, was in Schritt 24 erfolgt. Dies geschieht mit den folgenden Formeln:

$$V_{x.geo} = V_x \cos\psi_{wake} - V_y \sin\psi_{wake}$$

$$V_{y.geo} = V_x \sin\psi_{wake} - V_y \cos\psi_{wake}$$

$$V_{z.geo} = V_z$$

wobei nun die Geschwindigkeiten im geodetischen Koordinatensystem vorliegen und in das LOS-System mit der Formel (nur x-Komponente)

$$V_{x,LOS} = V_{x,geo} \cos \psi_{LIDAR} \cos \Theta_{LIDAR} + V_{y,geo} \cos \psi_{LIDAR} \cos \Theta_{LIDAR} - V_{z,geo} \cos \Theta_{LIDAR}$$

umgerechnet werden.

Dies erfolgt in Schritt 25.

Nachdem nun die berechneten Strömungsgeschwindigkeiten wieder in das LoS-System der Sensoren zurückgerechnet wurde und sich somit ein aus dem Strömungsmodell berechnetes bzw. simuliertes $\Delta V$ - $LoS$ ergibt, können diese gemessenen Strömungsgeschwindigkeiten in Messrichtung sowie die berechneten Strömungsgeschwindigkeiten in Messrichtung miteinander verglichen werden und hierüber beispielsweise Differenzen ermittelt werden. Dies erfolgt in Schritt 26. Je größer dabei die auftretende Differenz ist, umso ungenauer bilden die Parameter des Strömungsmodells die tatsächliche Strömung bzw. Wirbelschleppe ab. Daher müssen die Parameter des Strömungsmodells nunmehr in Abhängigkeit dieses Vergleiches angepasst werden, was beispielsweise mit Hilfe einer entsprechenden Optimierungsfunktion erfolgen kann. Solche Optimierungsfunktionen sind hinreichend aus dem Stand der Technik bekannt, beispielsweise durch Minimieren einer entsprechenden Gütefunktion, die als Eingangsparameter das Vergleichsergebnis aus Schritt 26 erhält.

In Abhängigkeit dieser Gütefunktion, die in Schritt 27 minimiert wird, werden dann die Parameter des Strömungsmodells angepasst und das Verfahren wird im Schritt 22 wiederholt. Das Wiederholen des Verfahrens kann dabei solange erfolgen, bis die Differenz, die in Schritt 26 bestimmt wird, einen entsprechenden Annäherungsschwellwert nicht überschreitet, so dass die Parameter des Strömungsmodells die tatsächliche Strömung hinreichend annähern.

Dabei hat sich herausgestellt, dass in der Regel nicht mehr als zehn Iterationsschritte notwendig sind, um eine Wirbelschleppe hinreichend anzunähern und sie so hochgenau zu identifizieren, dass diese Daten Eingang in die Flugsteuerung des Flugzeugs finden.

Figur 3 zeigt noch einmal beispielhaft eine solche Wirbelschleppe im Wirbelachsensystem. In der Wirbelebenen y, z drehen sich die beiden Wirbelkerne 41 und 42 gegensinnig. Die dort auftretenden Geschwindigkeiten sind in der Regel ausschließlich in dieser Wirbelebene y, z enthalten. Geschwindigkeiten in die Tiefe, d.h. in x-Richtung, treten so gut wie nicht auf.

Jeder der Wirbelkerne 41, 42 besitzt einen Wirbelmittelpunkt 41a, 42a, um die sich die beiden Wirbel drehen. Der Abstand $b_0$ dieser beiden Wirbelkerne 41 a, 42a voneinander wird mit ¾ der Flügelspannweite des wirbelerzeugenden Flugzeuges 43 angenommen.

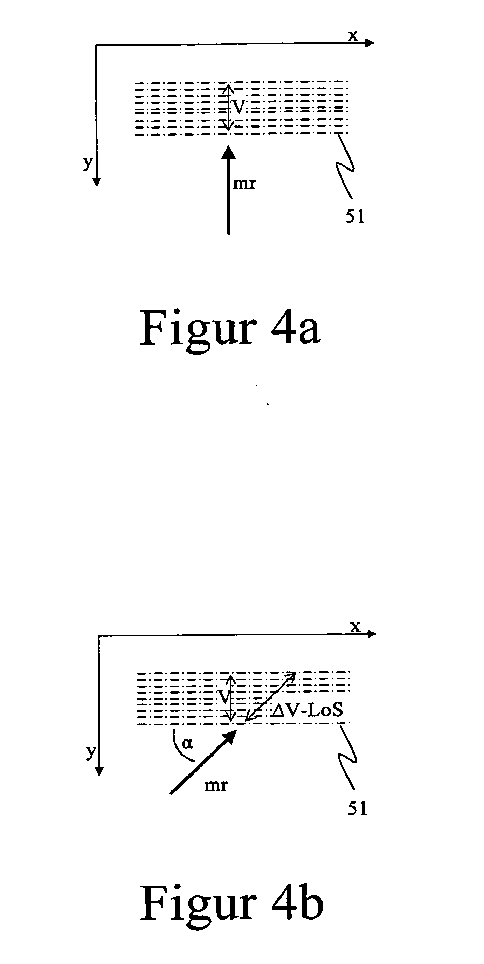

Die Figur 4a und Figur 4b zeigen noch einmal schematisch das Problem bei der so genannten LoS-Messung mit Hilfe von Lidar-Sensoren, die gerichtete Signale zur Geschwindigkeitserfassung aussenden. In Figur 4a ist die Wirbelschleppe 51 rechtwinklig zu der Messrichtung mr. Die Geschwindigkeit V ist hierbei ausschließlich in y-Richtung mittels des Lidar-Sensors ermittelbar. Eine z-Komponente der Geschwindigkeit sowie eine x-Komponente ist dagegen nicht messbar.

Figur 4b zeigt die gleiche Wirbelschleppe 51, jedoch mit dem Unterschied, dass die Messrichtung mr in einem Winkel $\alpha$ auf die Wirbelschleppenströmung 51 trifft. Die wahre Geschwindigkeit V und in y-Richtung ist in diesem Falle nicht messbar, sondern lediglich die so genannte $\Delta V$. Aus der Winkelbeziehung

$$V_y = \frac{\Delta V}{\sin \alpha}$$

lässt sich dann jedoch die wahre Geschwindigkeit in y-Richtung zurückrechnen.

Dazu ist jedoch wichtig, dass der Winkel $\alpha$ bekannt ist. Ist der Winkel $\alpha$ nur annäherungsweise bekannt, so ergeben sich somit unterschiedliche Strömungsgeschwindigkeiten, die nicht mehr 100%tig korrekt sind.

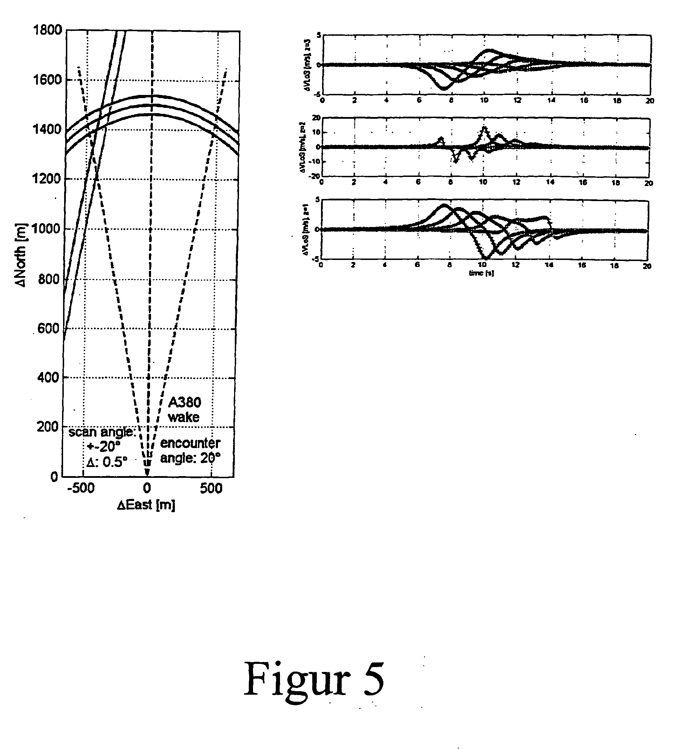

Figur 5 zeigt das Ergebnis einer LoS-Messung, wie sie im linken Bereich gezeigt ist, bei der in drei Zeilen pro Zeile fünf Messpositionen gemessen wurden. Das rechte Diagramm zeigt jeweils für jede Zeile an jeder der fünf gemessenen Messpositionen das Ergebnis der Strömungsgeschwindigkeitsmessung über die Zeit. Dabei wird von einem horizontalen Einflugwinkel von 20° ausgegangen sowie eine Rate von 10Hz angenommen. In 20 Sekunden ergeben sich somit 200 Messung für jeden Messpunkt, die in der Grafik dargestellt sind. Zu erkennen ist, dass sich für jeden Messpunkt unterschiedliche Strömungsgeschwindigkeiten ergeben, wobei diese Strömungsgeschwindigkeiten ausschließlich in Messrichtung ($\Delta V$ - LoS) ermittelbar sind.

**EP 2 340 438 B1**

**Patentansprüche**

**1.** Verfahren zur Ermittlung einer Strömung (51), bei dem Strömungsgeschwindigkeiten ($\Delta V\text{-}LoS$) in Messrichtung (mr) mittels Sensoren (2) an mindestens einer Messposition (4.1 bis 4.15) gemessen werden, mit den Schritten:

a) Initialisieren von Parametern (22, 22a, 22b, 22c) eines die Strömung (51) abbildenden Strömungsmodells,
b) Berechnen von simulierten Strömungsgeschwindigkeiten (23 bis 25) in Messrichtung (mr) an der mindestens einen Messposition (4.1 bis 4.15) in Abhängigkeit des die Strömung abbildenden Strömungsmodells,
c) Vergleichen der gemessenen Strömungsgeschwindigkeiten ($\Delta V - LoS$) mit den simulierten Strömungsgeschwindigkeiten (25) und Anpassen der Parameter (22, 22a, 22b, 22c) des die Strömung abbildenden Strömungsmodells durch Minimieren einer von dem Vergleichsergebnis abhängigen Gütefunktion (27), und
d) Wiederholen der Schritte b) und c) und Ermitteln der Strömung (51) in Abhängigkeit des angenäherten Strömungsmodells.

**2.** Verfahren nach Anspruch 1, **gekennzeichnet durch** Messen der Strömungsgeschwindigkeiten ($\Delta V - LoS$) innerhalb eines Zeitraumes an diskreten Zeitpunkten und Berechnen der simulierten Strömungsgeschwindigkeiten (25) an diesen Zeitpunkten.

**3.** Verfahren nach Anspruch 1 oder 2, **gekennzeichnet durch** Messen der Strömungsgeschwindigkeiten ($\Delta V - LoS$) an mehreren Messpositionen (4.1 bis 4.15) und Berechnen der simulierten Strömungsgeschwindigkeiten an jeder der Messpositionen (4.1 bis 4.15).

**4.** Verfahren nach einem der vorhergehenden Ansprüche, **gekennzeichnet durch** kontinuierliches Messen der Strömungsgeschwindigkeiten ($\Delta V - LoS$) und Durchführen der Schritte a) bis d) in Abhängigkeit der gemessenen Strömungsgeschwindigkeiten ($\Delta V - LoS$).

**5.** Verfahren nach einem der vorhergehenden Ansprüche, **gekennzeichnet durch** Wiederholen der Schritte b) und c) in Schritt d) solange, bis die Differenz zwischen gemessenen und simulierten Strömungsgeschwindigkeiten einen Annäherungsschwellenwert unterschreitet.

**6.** Verfahren nach einem der vorhergehenden Ansprüche, **gekennzeichnet durch** Initialisieren der Parameter (22a, 22b, 22c) des Strömungsmodells in Schritt a) in Abhängigkeit eines die Strömung erzeugenden Objektes (43).

**7.** Verfahren nach einem der vorhergehenden Ansprüche, **dadurch gekennzeichnet, dass** die Strömung (51) eine von einem Flugobjekt (43) erzeugte Wirbelschleppenströmung ist.

**8.** Verfahren nach Anspruch 7, **dadurch gekennzeichnet, dass** das Strömungsmodell ein analytisches Wirbelmodell, insbesondere ein analytisches Wirbelmodell nach Burnham-Hallock ist.

**9.** Verfahren nach Anspruch 8, **dadurch gekennzeichnet, dass** die Parameter (22a, 22b, 22c) des Wirbelmodells die Orientierung (22c), die Position (22a) und die Stärke (22b) der Wirbelschleppe sind.

**10.** Verfahren nach einem der Ansprüche 7 bis 9, **gekennzeichnet durch** Initialisieren (22) der Parameter (22a, 22b, 22c) des Wirbelmodells in Schritt a) in Abhängigkeit von übertragenden Flugdaten des wirbelerzeugenden Flugobjektes (43).

**11.** Computerprogramm mit Programmcodemitteln, eingerichtet zur Durchführung des Verfahrens nach einem der vorhergehenden Ansprüche, wenn das Computerprogramm auf einer Datenverarbeitungsanlage ausgeführt wird.

**12.** Vorrichtung zur Ermittlung einer Strömung (51) mit Sensoren (2) zum Messen von Strömungsgeschwindigkeiten ($\Delta V - LoS$) in Messrichtung (mr) und mit einer mit den Sensoren (2) verbundenen Recheneinheit, die zur Durchführung des Verfahrens nach einem der Ansprüche 1 bis 10 eingerichtet ist.

**Claims**

**1.** Method for determining a flow (51), in the case of which flow rates ($\Delta V\text{-}LoS$) in the measuring direction (mr) is measured by means of sensors (2) at at least one measurement position (4.1 to 4.15), having the following steps:

9

a) initialization of parameters (22, 22a, 22b, 22c) of a flow model representing the flow (51),
b) calculating simulated flow rates (23 to 25) in the measuring direction (mr) at the at least one measurement position (4.1 to 4.15) as a function of the flow model representing the flow,
c) comparing the measured flow rates (ΔV-LoS) with the simulated flow rates (25), and adapting the parameters (22, 22a, 22b, 22c) of the flow model representing the flow by minimizing a quality function (27) dependent on the comparative results, and
d) repeating steps b) and c), and determining the flow (51) as a function of the approximated flow model.

2. Method according to Claim 1, **characterized by** measuring the flow rates (ΔV-LoS) within a period at discrete instants, and calculating the simulated flow rates (25) at these instants.

3. Method according to either of Claims 1 and 2, **characterized by** measuring the flow rates (ΔV-LoS) at a plurality of measurement positions (4.1 to 4.15), and calculating the simulated flow rates at each of the measurement positions (4.1 to 4.15).

4. Method according to one of the preceding claims, **characterized by** continuous measurement of the flow rates (ΔV-LoS) and by carrying out of steps a) to d) as a function of the measured flow rates (ΔV-LoS).

5. Method according to one of the preceding claims, **characterized by** repetition of steps b) and c) in step d) until the difference between measured and simulated flow rates undershoots an approximate threshold value.

6. Method according to one of the preceding claims, **characterized by** initialization of the parameters (22a, 22b, 22c) of the flow model in step a) as a function of an object (43) generating the flow.

7. Method according to one of the preceding claims, **characterized in that** the flow (51) is a vortex wake flow generated by a flying object (43).

8. Method according to Claim 7, **characterized in that** the flow model is an analytical vortex model, in particular a Burnham-Hallock analytical vortex model.

9. Method according to Claim 8, **characterized in that** the parameters (22a, 22b, 22c) of the vortex model are the orientation (22c), the position (22a) and the strength (22b) of the vortex wake.

10. Method according to one of Claims 7 to 9, **characterized by** initialization (22) of the parameters (22a, 22b, 22c) of the vortex model in step a) as a function of transmitted flight data of the vortex-generating flying object (43).

11. Computer program with program code means which is set up to carry out the method according to one of the preceding claims when the computer program is executed on a data processing system.

12. Device for determining a flow (51), having sensors (2) for measuring flow rates (ΔV-LoS) in the measuring direction (mr), and having an arithmetic logic unit which is connected to the sensors (2) and is set up to carry out the method according to one of Claims 1 to 10.

**Revendications**

1. Procédé pour la détermination d'un écoulement (51), dans lequel les vitesses d'écoulement (ΔV-LoS) sont mesurées dans la direction de mesure (mr) au moyen de capteurs (2) à au moins une position de mesure (4.1 à 4.15), comprenant les étapes consistant à :

a) initialiser des paramètres (22, 22a, 22b, 22c) d'un modèle d'écoulement représentant l'écoulement (51),
b) calculer des vitesses d'écoulement simulées (23 à 25) dans la direction de mesure (mr) à l'au moins une position de mesure (4.1 à 4.15) en fonction du modèle d'écoulement représentant l'écoulement,
c) comparer les vitesses d'écoulement mesurées (ΔV-LoS)
aux vitesses d'écoulement simulées (25) et ajuster les paramètres (22, 22a, 22b, 22c) du modèle d'écoulement représentant l'écoulement par minimisation d'une fonction de qualité dépendant du résultat de comparaison (27), et
d) répéter les étapes b) et c) et déterminer l'écoulement (51) en fonction du modèle d'écoulement approché.

**2.** Procédé selon la revendication 1, **caractérisé par** la mesure de la vitesse d'écoulement ($\Delta V$ - $LoS$) à l'intérieur d'un intervalle de temps en des points discrets dans le temps, et par le calcul des vitesses d'écoulement simulées (25) en ces points dans le temps.

**3.** Procédé selon la revendication 1 ou 2, **caractérisé par** la mesure de la vitesse d'écoulement ($\Delta V$ - $LoS$) à de multiples positions (4.1 à 4.15), et par le calcul des vitesses d'écoulement simulées à chacune des positions de mesure (4.1 à 4.15).

**4.** Procédé selon l'une quelconque des revendications précédentes, **caractérisé par** la mesure en continu des vitesses d'écoulement ($\Delta V$ - $LoS$) et par l'exécution des étapes a) à d) en fonction des vitesses d'écoulement mesurées ($\Delta V$ - $LoS$).

**5.** Procédé selon l'une quelconque des revendications précédentes, **caractérisé par** la répétition des étapes b) et c) à l'étape d) jusqu'à ce que la différence entre les vitesses d'écoulement mesurées et simulées s'abaisse en dessous d'un seuil de convergence.

**6.** Procédé selon l'une quelconque des revendications précédentes, **caractérisé par** l'initialisation des paramètres (22a, 22b, 22c) du modèle d'écoulement à l'étape a) en fonction d'un objet (43) générant l'écoulement.

**7.** Procédé selon l'une quelconque des revendications précédentes, **caractérisé en ce que** l'écoulement (51) est un écoulement turbulent généré par un objet volant (43).

**8.** Procédé selon la revendication 7, **caractérisé en ce que** le modèle d'écoulement est un modèle analytique de turbulence, en particulier un modèle analytique de turbulence de Burnham-Hallock.

**9.** Procédé selon la revendication 8, **caractérisé en ce que** les paramètres (22a, 22b, 22c) du modèle de turbulence sont l'orientation (22c), la position (22a) et l'intensité (22b) de la turbulence de sillage.

**10.** Procédé selon l'une quelconque des revendications 7 à 9, **caractérisé par** l'initialisation (22) des paramètres (22a, 22b, 22c) du modèle de turbulence de l'étape a) en fonction de données de vol transmises de l'objet volant générant la turbulence (43).

**11.** Programme informatique comprenant un code de programme conçu pour mettre en oeuvre le procédé selon quelconque des revendications précédentes, lorsque le programme informatique est exécuté sur un système de traitement de données.

**12.** Dispositif pour déterminer un écoulement (51) au moyen de capteurs (2) destinés à mesurer des vitesses d'écoulement ($\Delta V$ - $LoS$) dans la direction de mesure (mr) et comprenant une unité de calcul connectée aux capteurs (2), qui est conçue pour la mise en oeuvre du procédé selon l'une quelconque des revendications 1 à 10.

# Figur 1a

Figur 1b

Figur 2

Figur 3

# Figur 4a

# Figur 4b

Figur 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007059455 A1
- EP 1837661 A1
- DE 1039109 A1
- DE 4320295 A1
- DE 102007051318 A1